(19) Europäisches Patentamt
European Patent Office
Office européen des brevets

(11) Veröffentlichungsnummer: **0 044 025**
**B1**

# (12) EUROPÄISCHE PATENTSCHRIFT

(45) Veröffentlichungstag der Patentschrift: **01.02.84**

(21) Anmeldenummer: **81105282.8**

(22) Anmeldetag: **08.07.81**

(51) Int. Cl.³: **C 08 G 65/08,** C 08 G 65/28, C 07 C 93/06, B 01 F 17/46, C 09 B 67/46, C 09 B 67/20, C 09 D 17/00, C 08 G 59/14

(54) **Bisphenolderivate, Verfahren zu ihrer Herstellung und ihre Verwendung als Tenside.**

(30) Priorität: **10.07.80 DE 3026127**

(43) Veröffentlichungstag der Anmeldung: **20.01.82 Patentblatt 82/3**

(45) Bekanntmachung des Hinweises auf die Patenterteilung: **01.02.84 Patentblatt 84/5**

(84) Benannte Vertragsstaaten: **BE CH DE FR GB IT LI NL SE**

(56) Entgegenhaltungen:
**EP - A - 0 017 189**
**DE - A - 2 152 076**
**FR - A - 2 334 656**
**US - A - 3 984 299**

(73) Patentinhaber: **HOECHST AKTIENGESELLSCHAFT, Postfach 80 03 20, D-6230 Frankfurt am Main 80 (DE)**

(72) Erfinder: **Dietz, Erwin, Dr., In den Padenwiesen 38, D-6233 Kelkheim (Taunus) (DE)**
Erfinder: **Hoffmann, Erich, Dr., Unter den Weingärten 8, D-6239 Kriftel (DE)**
Erfinder: **Weide, Joachim, Im Stückes 63, D-6233 Kelkheim (Taunus) (DE)**

**EP 0 044 025 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Bisphenolderivate, Verfahren zu ihrer Herstellung
und ihre Verwendung als Tenside

Gegenstand der Erfindung sind Verbindungen der allgemeinen Formel

$$X—Y—O—(—A—O—Y—O—)_m—A—O—Y—X \qquad (1)$$

worin

X einen Rest der allgemeinen Formel

$$[R^1—G_p—(O—CHR^2—CHR^3—)_n]_2N— \qquad (1\,a)$$

bedeutet, in dem

$R^1$ ein gesättigter oder ein- oder mehrfach ethylenisch ungesättigter aliphatischer Rest mit 6 bis 30 Kohlenstoffatomen ist,
G Phenylen oder Naphthylen ist,
p Null oder 1 ist,
$R^2$ und $R^3$ Wasserstoff oder Methyl sind, jedoch nicht gleichzeitig Methyl, und
n eine Zahl von 0 bis 25 ist;

Y einen Rest der Formel

$$\begin{array}{l} —CH_2—CH—CH_2— \\ \qquad\quad | \\ \qquad (O—CHR^2—CHR^3)_q—OH \end{array} \qquad (1\,b)$$

bedeutet, in der

$R^2$ und $R^3$ die genannten Bedeutungen haben und
q für gleiche oder verschiedene Zahlen von Null bis etwa 200 steht;

A einen Rest der allgemeinen Formel

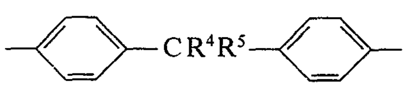
(1 c)

bedeutet, in der

$R^4$ und $R^5$ Wasserstoff oder Alkyl mit 1 bis 3 Kohlenstoffatomen sind; und
m eine Zahl von Null bis 5 ist, wobei n und q nicht gleichzeitig Null sind.

Bevorzugt sind Verbindungen, in denen $R^1$ ein gesättigter oder 1- oder 2fach ungesättigter aliphatischer Rest mit 6 bis 20 Kohlenstoffatomen ist, insbesondere der Rest eines Fettalkohols aus natürlichen Fetten und Ölen, eines Alkohols aus der Oxosynthese oder eines Alkylphenols oder gegebenenfalls auch Alkylnaphthols, wie sie auf dem Tensidsektor gebräuchlich sind. p ist vorzugsweise Null; falls es 1 ist, ist G bevorzugt Phenylen, insbesondere p-Phenylen, n eine Zahl von 1 bis 15, q eine Zahl von 10 bis 100, $R^4$ und $R^5$ Wasserstoff oder Methyl und m Null. Die Polyoxyalkylengruppe in der Formel (1b) ist bevorzugt eine Polyoxyethylen-Kette oder eine Block-copolymer-Kette aus Propylen- und Ethylenoxid, wobei q eine Zahl von 10 bis 100 ist.

Gegenstand der Erfindung ist weiterhin die Herstellung der Verbindungen der Formel (1), die dadurch gekennzeichnet ist, daß man 2 Mol eines Amins der allgemeinen Formel

$$H—X \qquad (2)$$

in der X die vorstehend genannte Bedeutung hat, mit einem Bisepoxid der allgemeinen Formel

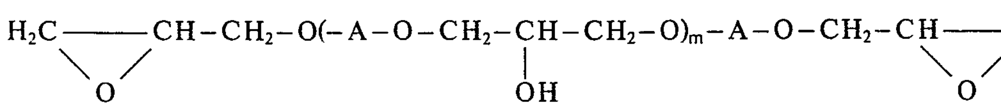
(3)

worin A und m die vorstehend genannte Bedeutung haben, bei Temperaturen von 80 bis 200°C in Gegenwart eines sauren Katalysators kondensiert und das Kondensationsprodukt mit (m+2)q Mol Ethylenoxid und/oder Propylenoxid bei 100 bis 200°C in Gegenwart eines basischen Katalysators

umsetzt, wobei q die vorstehend genannte Bedeutung hat.

Gegenstand der Erfindung ist weiterhin die Verwendung der Verbindungen der Formel (1) als Tenside, insbesondere als Dispergiermittel. Die Verbindungen eignen sich insbesondere zum Dispergieren von Feststoffen in wäßrigen Flüssigkeiten, insbesondere für Farbmittel, vor allem für Pigmente. Ein besonders bevorzugtes Anwendungsgebiet ist die Herstellung von wäßrigen Druckfarben und Dispersionsfarben.

Die Ausgangsmaterialien der Formel (2) sind aus der DE-OS 2 555 895 bekannt.

Die Bis-Epoxide der allgemeinen Formel (3) können beispielsweise durch Umsetzung von 2,2-Bis-(4-hydroxyphenyl)-methan, -propan oder -butan mit Epichlorhydrin hergestellt werden (Ullmanns Enzyklopädie der Technischen Chemie, 3. Auflage, 8. Band (1957), Seite 431 ff.).

Die Tensideigenschaften der beanspruchten Verbindungen ergeben sich durch das Vorhandensein hydrophiler und hydrophober Strukturen im Molekül, wobei die hydrophilen Eigenschaften im wesentlichen durch die Polyoxyalkylen-Ketten gegeben sind. Durch Auswahl der Ausgangsmaterialien der Formeln (2) und (3) einerseits und durch Art und Menge des Alkylenoxids andererseits können die gewünschten Tensideigenschaften in weiten Grenzen beeinflußt werden. Vorteilhaft wird das Alkylenoxid so bemessen, daß klarwasserlösliche Verbindungen erhalten werden.

Die Kondensation der Verbindungen (2) und (3) erfolgt vorteilhaft bei Temperaturen oberhalb 100° C, insbesondere bei Temperaturen zwischen 120 und 180°C. Es ist zweckmäßig, die Reaktion unter Ausschluß von Sauerstoff durchzuführen. Als saure Katalysatoren kommen insbesondere Lewis-Säuren in Betracht, beispielsweise Aluminiumchlorid, Bortrifluorid-Ether-Komplexe oder Phenole.

Die Oxalkylierung der Kondensationsprodukte aus den Aminen (2) und den Bisepoxiden (3) erfolgt zweckmäßig mit stark basischen Katalysatoren wie Kaliumhydroxid, Natriumhydroxid oder Alkalimetallalkoholaten, beispielsweise Natriummethylat. Die Temperatur liegt zweckmäßig im Bereich von 120 bis 180°C, insbesondere zwischen 150 und 170°C. Die Oxalkylierung kann mit Ethylenoxid alleine oder mit einem Gemisch aus Ethylenoxid und Propylenoxid durchgeführt werden. Man kann aber auch zunächst mit Propylenoxid eine Polyoxypropylenkette und anschließend mit Ethylenoxid eine Polyoxyethylenkette in das Tensidmolekül einführen. Die Menge an Ethylenoxid wird vorzugsweise so bemessen, daß in Wasser gut lösliche Verbindungen erhalten werden. Die Oxalkylierung kann drucklos oder in Druckgefäßen erfolgen. Der bevorzugte Arbeitsdruck beträgt 2 bis 8 bar.

Die erfindungsgemäßen Tenside eignen sich zum Dispergieren von Feststoffen, insbesondere in wäßrigen Flüssigkeiten. Zu erwähnen sind Dispersionen, die als Feststoffe beispielsweise feinteilige Erze, Mineralien, schwer- bzw. unlösliche Salze, Wachs- bzw. Kunststoffteilchen, Pflanzenschutz- und Schädlingsbekämpfungsmittel und optische Aufheller, insbesondere Farbstoffe und Pigmente, enthalten.

Besonders hervorzuheben ist die Eignung der erfindungsgemäßen Tenside zur Herstellung von Pigmentdispersionen. Derartige Pigmentdispersionen können anorganische und/oder organische Pigmente enthalten. Als anorganische Pigmente eignen sich z. B. Weiß- und Buntpigmente wie Titanoxide, Zinkoxide, Zinksulfide, Cadmiumsulfide oder -selenide, Eisenoxide, Chromoxide, Chromatpigmente, als Pigmente geeignete Mischoxide aus den Elementen Aluminium, Antimon, Chrom, Eisen, Kobalt, Kupfer, Nickel, Titan und Zink, sowie Ruße und Verschnittpigmente.

Als geeignete organische Pigmente sind beispielsweise zu nennen: Azopigmente, Azamethine, Azaporphine, Chinacridone, Flavanthron-, Anthanthron- und Pyranthronkörper, Derivate der Naphthalintetracarbonsäure, der Perylentetracarbonsäure, des Thioindigos, des Dioxazins und des Tetrachlorisoindolinons, verlackte Pigmente wie Mg-, Ca-, Sr-, Ba-, Al-, Mn-, Co- und Ni-Salze von säuregruppenhaltigen Farbstoffen, sowie entsprechende Pigmentmischungen.

Die Feststoffdispersionen können außer den erfindungsgemäßen Tensiden weitere übliche Zusatzstoffe wie Schaum- und Viskositätsregulatoren, Antiabsetzmittel, Netz- und Lösemittel, Hydrotropica, Konservierungsmittel, Mittel, die das Eintrocknen verhindern bzw. verzögern sowie anionische, kationische, nichtionische oder amphotere bekannte Tenside und Schutzkolloide enthalten.

Als bekannte Tenside kommen Stoffe in Frage, wie sie beispielsweise in K. Lindner; Tenside, Textilhilfsmittel, Waschrohstoffe, in N. Schönfeldt; Grenzflächenaktive Äthylenoxydaddukte, ihre Herstellung, Eigenschaften, Anwendung und Analyse und in Mc Cutcheon, Detergents & Emulsifiers, International Edition 1978 beschrieben werden.

Als Konservierungsmittel kommen Stoffe in Betracht, wie sie beispielsweise von K.-H. Wallhäußer und W. Fink in Farbe und Lack, 82. Jahrgang (1976), Heft 2, Seite 108—125, zusammengestellt wurden.

Als das Eintrocknen der Feststoffdispersionen verhindernde bzw. verzögernde Zusätze eignen sich vor allem Stoffe mit geringer Flüchtigkeit, die mit Wasser vollständig oder begrenzt mischbar sind, wie beispielsweise mehrwertige Alkohole sowie deren Ether und deren Reaktionsprodukte mit Ethylenoxid bzw. Propylenoxid, insbesondere Glykole, Glykolether und Polyglykole sowie Säureamide, insbesondere Formamid, Harnstoff und 1-Methyl-2-pyrrolidon. Derartige Zusätze können allein oder in Mischung untereinander verwendet werden.

Die Herstellung der Feststoffdispersionen erfolgt je nach Kornhärte der eingesetzten Feststoffe

beispielsweise mit Rührwerken, Dissolvern, Rotor-Stator-Mühlen, Kugelmühlen, Rührwerkskugelmühlen (Sand- oder Perlmühlen), in Schnellmischern, Knetapparaturen oder auf Walzenstühlen.

Bevorzugte Dispersionen enthalten 4 bis 85, vorzugsweise 30 bis 80 Gew.-% Feststoffe, 1 bis 30, vorzugsweise 2 bis 15 Gew.-% der erfindungsgemäßen Tenside und 5 bis 95, vorzugsweise 10 bis 60 Gew.-% Wasser einschließlich weiterer möglicher Zusatzstoffe.

Feststoffdispersionen, welche die erfindungsgemäßen Tenside enthalten, besitzen eine hohe Stabilität und einen hohen Feststoffgehalt bei gleichzeitig guten rheologischen Eigenschaften.

Werden als Feststoffe Pigmente eingesetzt, so werden Pigmentdispersionen erhalten, die vielseitig verwendbar sind. Sie eignen sich beispielsweise zum Anfärben (Pigmentieren) von Dispersions- und Tapetenanstrichfarben, mit Wasser verdünnbaren Lacken, Holzbeizen, Papiermassen, Druckfarben für den Textildruck, Tiefdruck, Flexodruck und anderen Druckverfahren sowie für den Einsatz bei der Spinnfärbung. Die guten Dispergiereigenschaften der erfindungsgemäßen Tenside führen zu Pigmentdispersionen mit hoher Färbekraft und Brillanz. Gegenüber Pigmentdispersionen mit herkömmlichen Tensiden zeichnen sich die Pigmentdispersionen mit den erfindungsgemäßen Tensiden durch eine breite Verträglichkeit mit den verschiedensten wäßrigen Bindemittelsystemen, insbesondere wäßrigen Druckfarben und eine besonders hohe Flockungsstabilität, vor allem gegenüber celluloseetherhaltigen Kunststoffdispersionen und Anstrichfarben, aus.

## Beispiele

### Herstellungsbeispiel 1

In einem 500-ml-Kolben mit Rückflußkühler, Rührer und Innenthermometer werden 340 g eines Etheramins der Formel $[R^1-(O-CH_2-CH_2)_5]_2NH$, in welcher $R^1$ für den Alkylrest des Cocosfettalkohols steht (mit einem mittleren Molgewicht von 880), 72,6 g eines Diglycidylethers von 2,2-Bis-(4-hydroxy-phenyl)-propan (Eponzahl 193, gefundenes Molgewicht 378) und 0,6 g Phenol als Katalysator vorgelegt, unter Stickstoffatmosphäre langsam auf 150° C erhitzt und 16 h bei dieser Temperatur gehalten. Nach dem Abkühlen erhält man eine gelbe, viskose Flüssigkeit mit einer Eponzahl kleiner 1.

a) 162 g des erhaltenen Additionsproduktes werden in Gegenwart von 0,75 g pulverisiertem Kaliumhydroxid mit 190 g Ethylenoxid bei 170° C im Druckgefäß oxethyliert. Das wachsartige, leicht bräunlich gefärbte Reaktionsprodukt besitzt einen Trübungspunkt in Wasser von 73° C (nach DIN 53 917).

b) 115 g des erhaltenen Additionsproduktes werden nach Zugabe von 1 g pulverisiertem Natriumhydroxid im Autoklav mit 285 g Ethylenoxid umgesetzt. Das bräunliche wachsartige Tensid weist einen Trübungspunkt von 91° C auf.

c) 130 g des erhaltenen Additionsproduktes werden nach dem Vermischen mit 1,3 g Natriumhydroxidpulver im Druckgefäß mit 17 g Propylenoxid und anschließend mit 172 g Ethylenoxid zur Reaktion gebracht. Das wachsartige Mischoxalkylat zeigt in wäßriger Lösung einen Trübungspunkt von 73° C.

### Herstellungsbeispiel 2

Entsprechend Beispiel 1 werden 253 g eines Additionsprodukts aus 2 Mol eines Etheramins der Formel $[C_{17}H_{33}-(O-CH_2-CH_2-)_{12}]_2NH$ und 1 Mol des Diglycidylethers von 2,2-Bis-(4-hydroxyphenyl)-propan in Gegenwart von 1 g Kaliumhydroxidpulver mit 618 g Ethylenoxid bei 170° C im Druckgefäß oxethyliert. Das erhaltene bräunliche, wachsartige Tensid zeigt einen Trübungspunkt von 90° C in Wasser.

### Herstellungsbeispiel 3

Analog Beispiel 1 werden in einem Druckgefäß zu 185 g des Additionsprodukts aus 2 Mol des Etheramins aus Beispiel 1 und 1 Mol des Diglycidylether von 2,2-Bis-(4-hydroxyphenyl)-methan in Gegenwart von 0,5 g Natriumhydroxidpulver innerhalb von 6 h 230 g Ethylenoxid zugegeben. Das resultierende bräunliche, wachsartige Tensid weist einen Trübungspunkt von 80° C in Wasser auf.

### Herstellungsbeispiel 4

180 g des sekundären Etheramins aus Beispiel 1 werden unter Zugabe von 0,5 g Phenol mit 95,5 g einer Verbindung der folgenden Formel

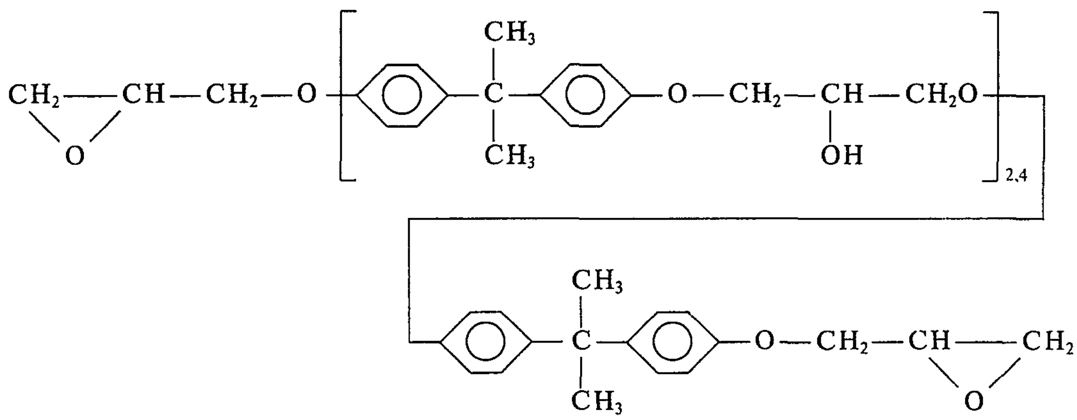

wie in Beispiel 1 beschrieben zur Reaktion gebracht. 150 g dieses Reaktionsproduktes werden mit 1 g Kaliumhydroxidpulver versetzt und in einem Druckgefäß mit 147 g Ethylenoxid bei 160° C umgesetzt. Das bräunliche, wachsartige Polyoxalkylat zeigt in wäßriger Lösung einen Trübungspunkt von 77° C

### Herstellungsbeispiel 5

Entsprechend Beispiel 1 werden 169 g eines Addukts aus 2 Mol eines Etheramins der Formel $[R^1-(O-CH_2-CH_2-)_8]_2NH$, in der $R^1$ für den Alkylrest des Talgfettalkohols steht, und 1 Mol des Diglycidylethers von 2,2-Bis-(4-hydroxyphenyl)-propan nach Zugabe von 1 g Natriumhydroxidpulver mit 110 g Ethylenoxid umgesetzt. Der Trübungspunkt des bräunlichen, wachsartigen Tensids liegt bei 72° C.

### Herstellungsbeispiel 6

Entsprechend Beispiel 1 werden 295 g eines Addukts aus 2 Mol eines Etheramins der Formel $[R^1-(O-CH_2-CH_2-)_{10}]_2NH$, in der $R^1$ für den Alkylrest des Cocosfettalkohols steht, und 1 Mol Diglycidylether von 2,2-Bis-(4-hydroxyphenyl)-propan nach Zugabe von 1 g Natriumhydroxidpulver mit 226 g Ethylenoxid zur Reaktion gebracht. Das wachsartige, bräunliche Polyoxalkylat besitzt einen Trübungspunkt von 74° C in Wasser.

### Herstellungsbeispiel 7

Entsprechend Beispiel 1 werden 161 g eines Addukts aus 2 Mol eines Etheramins der Formel $[iso-C_{13}H_{27}-(O-CH_2-CH_2)_8]_2NH$ und 1 Mol Diglycidylether von 2,2-Bis-(4-hydroxyphenyl)-propan nach Zugabe von 1 g Natriumhydroxidpulver mit 197 g Ethylenoxid umgesetzt. Das erhaltene, bräunliche Reaktionsprodukt ist von wachsartiger Konsistenz und weist einen Trübungspunkt von 78° C in Wasser auf.

### Herstellungsbeispiel 8

Entsprechend Beispiel 1 werden in einem Druckgefäß 210 g eines Additionsprodukts aus 2 Mol eines sekundären Etheramins der Formel

$$[R^1-(O-CH_2-CH_2)_5]_2NH$$

in welcher $R^1$ für einen 4-Isononylphenylrest steht, und 1 Mol des Diglycidyläthers von 2,2-Bis-(4-hydroxyphenyl)-propan in Gegenwart von 0,9 g Kaliumhydroxidpulver mit 242 g Ethylenoxid bei 170° C oxethyliert. Das erhaltene bräunliche wachsartige Tensid zeigt einen Trübungspunkt von 80° C in Wasser.

In den folgenden Anwendungsbeispielen beziehen sich Teile auf das Gewicht.

### Anwendungsbeispiel 1

700 Teile eines gemahlenen Dolomits werden mit einem Dissolver in einem Gemisch aus
10 Teilen Ölsäure,

30 Teilen des Tensids aus Herstellungsbeispiel 2 und
193 Teilen Wasser unter Zusatz von
10 Teilen einer hochdispersen, pyrogenen Kieselsäure 0,5 h dispergiert. Durch Zugabe von
57 Teilen Wasser wird eine fließfähige, leicht thixotrope und pumpfähige Dispersion mit guter Lagerstabilität erhalten.

Anwendungsbeispiel 2

700 Teile eines Eisenoxidrot-Pigments werden portionsweise in eine Mischung aus
40 Teilen des Tensids aus Herstellungsbeispiel 3,
5 Teilen Talgfettpropylendiamin,
100 Teilen 2-Ethyl-2-(hydroxymethyl)-propan-1,3-diol und
130 Teilen Wasser eingetragen und mit einem Dissolver bis zu einer Kornfreiheit kleiner als 5 µm dispergiert. Nach dem Verdünnen mit
25 Teilen Wasser wird eine Pigmentpräparation mit guten rheologischen Eigenschaften erhalten, die sich besonders zum Anfärben wäßriger Anstrichfarben auf Basis von Kunststoffdispersionen eignet.

Wird diese Pigmentpräparation beispielsweise in einer Konzentration von 2 Gew.-% in eine Dispersionsfarbe eingerührt, welche als Bindemittel ein Copolymerisat aus Styrol und Acrylsäureester und als Celluloseether eine Methylhydroxyethyl-cellulose enthält, und die angefärbte Dispersionsfarbe auf Papier aufgestrichen, so wird eine farbstarke Färbung erhalten, die beim Rub-out-Test (DE-AS 2 638 946, Spalte 3) keine Flockungserscheinungen erkennen läßt.

Anwendungsbeispiel 3

Entsprechend Anwendungsbeispiel 2 wird eine Pigmentdispersion aus

800 Teilen eines Chromoxidgrün-Pigments,
22 Teilen des Tensids aus Herstellungsbeispiel 2,
3 Teilen N-Oleoylsarcosin,
50 Teilen Ethylenglykol und
125 Teilen Wasser hergestellt. Die Eigenschaften dieser Pigmentdispersion sind mit denen der Dispersion des Anwendungsbeispiels 2 vergleichbar.

Anwendungsbeispiel 4

In einem Doppelmuldenkneter werden

370 Teile C. I. Pigment Violet 23 (Colour Index No. 51 319), welches beim Finish entsprechend DE-AS 2 731 175, Beispiel 12, modifiziert wurde, in Gegenwart von
100 Teilen des Tensids aus Herstellungsbeispiel 1c und
150 Teilen Ethylenglykol dispergiert. Anschließend wird die Knetmasse mit
110 Teilen Ethylenglykol,
268 Teilen Wasser und
2 Teilen Konservierungsmittel zu einer lagerstabilen Dispersion mit sehr guten rheologischen Eigenschaften verdünnt, welche sich besonders zum Anfärben wäßriger Bindemittelsysteme für den Anstrichsektor und den textilen Pigmentdruck eignet.

Wird diese Pigmentdispersion z. B. in einer Konzentration von 1 Gew.-% in die im Anwendungsbeispiel 2 beschriebene Dispersionsfarbe eingerührt und auf Papier aufgezogen, so führt dies zu farbstarken, brillanten Färbungen sowie einem einwandfreien Rub-out-Test.

Vergleichbar gute Ergebnisse werden erzielt, wenn die 100 Teile des Tensids aus Herstellungsbeispiel 1c durch 100 Teile des Tensids aus Herstellungsbeispiel 1a und die 260 Teile Ethylenglykol durch 260 Teile Formamid ersetzt werden.

Anwendungsbeispiel 5

Entsprechend Anwendungsbeispiel 4 werden in einem Kneter

400 Teile C. I. Pigment Red 168 (Colour Index No. 59 300) mit

80 Teilen des Tensids aus Herstellungsbeispiel 6 und
115 Teilen 1,2-Propandiol dispergiert und mit weiteren
35 Teilen 1,2-Propandiol und
370 Teilen Wasser zu einer sehr gut fließfähigen Dispersion verdünnt, die vor allem auf dem Sektor der wäßrigen Anstrichfarben auf Basis von Kunststoffdispersionen die ausgezeichneten coloristischen Eigenschaften und die gute Flockungsstabilität voll zur Entfaltung bringt.

Eine Pigmentdispersion mit ähnlich guten Eigenschaften wird erhalten, wenn die 80 Teile des Tensids aus Herstellungsbeispiel 6 durch 80 Teile des Tensids aus Herstellungsbeispiel 4 und die insgesamt 150 Teile 1,2-Propandiol durch 100 Teile Glycerin und 50 Teile 1-Methyl-2-pyrrolidon ersetzt werden.

## Anwendungsbeispiel 6

480 Teile Pigment Red 112 (Colour Index No. 12 370) werden in einem Doppelmuldenkneter mit
90 Teilen des Tensids aus Herstellungsbeispiel 1b,
10 Teilen des Natriumsalzes eines Schwefelsäurehalbesters aus einem Addukt von 7 Mol Ethylenoxid an 1 Mol Tributylphenol,
100 Teilen Ethylenglykol und
70 Teilen Wasser 1 h dispergiert. Anschließend wird die Knetmasse durch Zugabe von
250 Teilen Wasser zu einer lagerstabilen, dünnflüssigen Pigmentpräparation verdünnt, die sich hervorragend zum Anfärben wäßriger Flexo- bzw. Tiefdruckfarben und zum Pigmentieren wäßriger Anstrichfarben auf Basis von Kunststoffdispersionen eignet.

## Anwendungsbeispiel 7

420 Teile eines Pigmentrußes mit einer spez. Oberfläche nach BET von 85 $m^2/g$ werden in eine Lösung aus
60 Teilen des Tensids aus Herstellungsbeispiel 1a,
100 Teilen Ethylenglykol und
340 Teilen Wasser eingerührt. Diese Suspension wird in einer Rührwerkskugelmühle mit 1-mm-Siliquarzit-Perlen gemahlen und anschließend durch Zugabe von
80 Teilen Wasser verdünnt. Die auf diese Weise erhaltene, lagerstabile Pigmentdispersion eignet sich hervorragend für den Einsatz in wäßrigen Flexo- und Tiefdruckfarben.

## Anwendungsbeispiel 8

450 Teile eines durch Mischkupplung von diazotiertem 3,3'-Dichlorbenzidin auf Acetessig-anilid und Acetessig-p-anisidid im Verhältnis 9 : 1 erhaltenen Pigments werden mit
80 Teilen des Tensids aus Herstellungsbeispiel 5 und
160 Teilen Wasser in einem Doppelmuldenkneter 2 h dispergiert. Durch Zugabe von
100 Teilen Ethylenglykol und
210 Teilen Wasser wird eine dünnflüssige Pigmentpräparation erhalten, die sich in jedem Verhältnis mit Wasser weiterverdünnen läßt. Sie eignet sich besonders zum Anfärben wasserhaltiger Bindemittelsysteme.

## Anwendungsbeispiel 9

In einer Rührwerkskugelmühle wird eine Suspension aus

450 Teilen C. I. Pigment Green 7 (Colour Index No. 74 260),
60 Teilen des Tensids aus Herstellungsbeispiel 1c,
40 Teilen eines Addukts von 11 Mol Ethylenoxid an 1 Mol Nonylphenol,
50 Teilen Harnstoff,
100 Teilen Diethylenglykol,
258 Teilen Wasser und
2 Teilen Konservierungsmittel mit 1-mm-Siliquarzit-Perlen gemahlen und anschließend mit weiteren
40 Teilen Wasser zu einer Pigmentdispersion mit sehr guten rheologischen Eigenschaften verdünnt. Sie eignet sich vor allem zum Pigmentieren von wäßrigen Anstrichfarben auf Basis von Kunststoffdispersionen, wo sie sich durch eine hohe Flockungsstabilität und gute coloristische Eigenschaften auszeichnet.

Pigmentdispersionen mit vergleichbar guten Eigenschaften werden erhalten, wenn die 60 Teile des Tensids aus Herstellungsbeispiel 1c durch 60 Teile des Tensids aus Herstellungsbeispiel 7 oder 8 ersetzt werden.

## Patentansprüche

1. Verbindungen der allgemeinen Formel

$$X—Y—O—(—A—O—Y—O—)_m—A—O—Y—X \qquad (1)$$

worin

X einen Rest der allgemeinen Formel

$$[R^1—G_p—(O—CHR^2—CHR^3—)_n]_2N— \qquad (1\,a)$$

bedeutet, in dem

$R^1$ ein gesättigter oder ein ein- oder mehrfach ethylenisch ungesättigter aliphatischer Rest mit 6 bis 30 Kohlenstoffatomen ist,
G Phenylen oder Naphthylen ist,
p Null oder 1 ist,
$R^2$ und $R^3$ Wasserstoff oder Methyl sind, jedoch nicht gleichzeitig Methyl, und
n eine Zahl von 0 bis 25 ist;

Y einen Rest der Formel

$$—CH_2—\underset{\displaystyle (O—CHR^2—CHR^3)_q—OH}{\underset{|}{CH}}—CH_2— \qquad (1\,b)$$

bedeutet, in der

$R^2$ und $R^3$ die genannten Bedeutungen haben und
q für gleiche oder verschiedene Zahlen von Null bis etwa 200 steht;

A einen Rest der allgemeinen Formel

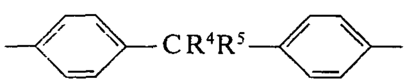

(1 c)

bedeutet, in der

$R^4$ und $R^5$ Wasserstoff oder Alkyl mit 1 bis 3 Kohlenstoffatomen sind; und
m eine Zahl von Null bis 5 ist, wobei n und q nicht gleichzeitig Null sind.

2. Verbindungen nach Anspruch 1, in denen

$R^1$ ein gesättigter oder ein ein- oder zweifach ungesättigter aliphatischer Rest mit 6 bis 20 Kohlenstoffatomen ist,
G Phenylen ist,
n eine Zahl von 1 bis 15 ist,
q eine Zahl von 10 bis 100 ist,
$R^4$ und $R^5$ Wasserstoff oder Methyl sind und
m Null ist.

3. Verbindungen nach Anspruch 1 und 2, in denen

$R^1$ der Rest eines Fettalkohols aus natürlichen Fetten und Ölen oder eines Alkohols aus der Oxosynthese ist.

4. Verbindungen nach Anspruch 1 bis 3, in denen die Gruppe $(OCHR^2CHR^3)_q$ eine Polyoxethylenkette oder eine Blockcopolymerkette aus Propylen- und Ethylenoxid ist, wobei q eine Zahl von 10 bis 100 ist.

5. Verfahren zur Herstellung der Verbindungen nach Anspruch 1, dadurch gekennzeichnet, daß man

2 Mol eines Amins der allgemeinen Formel

$$H—X \quad (2)$$

in der X die in Anspruch 1 genannte Bedeutung hat, mit einem Bisepoxid der allgemeinen Formel

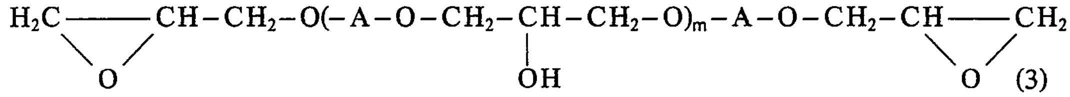

(3)

worin A und m die in Anspruch 1 genannte Bedeutung haben, bei Temperaturen von 80 bis 200°C in Gegenwart eines sauren Katalysators kondensiert und das Kondensationsprodukt mit (m+2)q Mol Ethylenoxid und/oder Propylenoxid bei 100 bis 200°C in Gegenwart eines basischen Katalysators umsetzt, wobei q die in Anspruch 1 genannte Bedeutung hat.

6. Verwendung der Verbindungen nach Anspruch 1 bis 4 als Tenside.
7. Verwendung der Verbindungen nach Anspruch 1 bis 4 als Dispergiermittel.
8. Verwendung der Verbindungen nach Anspruch 1 bis 4 als Dispergiermittel für Farbmittel.
9. Verwendung der Verbindungen nach Anspruch 1 bis 4 als Dispergiermittel für Pigmente.
10. Verwendung der Verbindungen nach Anspruch 1 bis 4 zur Herstellung von wäßrigen Druckfarben und Dispersionsfarben.

**Claims**

1. A compound of the general formula

$$X—Y—O—(—A—O—Y—O—)_m—A—O—Y—X \quad (1)$$

wherein X represents a radical of the general formula

$$[R^1—G_p—(O—CHR^2—CHR^3—)_n]_2N— \quad (1\,a)$$

in which $R^1$ is a saturated aliphatic radical having 6 to 30 carbon atoms or an unsaturated aliphatic radical having one or several ethylenic bonds and 6 to 30 carbon atoms, G is phenylene or naphthylene, p is zero or 1, $R^2$ and $R^3$ are hydrogen or methyl, but are not both methyl, and n is a number from 0 to 25, Y represents a radical of the formula

—CH₂—CH—CH₂—
      |
     (O—CHR²—CHR³)q—OH   (1 b)

in which $R^2$ and $R^3$ have the indicated meanings and q represents identical or different numbers from 0 to about 200, A denotes a radical of the general formula

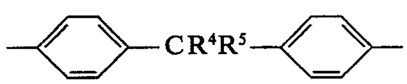

(1 c)

in wich $R^4$ and $R^5$ are hydrogen or alkyl having 1 to 3 carbon atoms, and m is a number from zero to 5, n and q not both being zero.

2. A compound as claimed in claim 1, wherein $R^1$ is a saturated aliphatic radical having 6 to 20 carbon atoms or an unsaturated aliphatic radical having one or two double bonds and 6 to 20 carbon atoms, G is phenylene, n is a number from 1 to 15, q is a number from 10 to 100, $R^4$ and $R^5$ are hydrogen or methyl and m is zero.

3. A compound as claimed in claim 1 or 2, wherein $R^1$ is the radical of a fatty alcohol from natural fats and oils or the radical of an alcohol from the oxo synthesis.

4. A compound as claimed in any of claims 1 to 3, wherein the group $(OCHR^2CHR^3)_q$ is a polyoxyethylene chain or a block copolymer chain of propylene oxide and ethylene oxide units, q being a number from 10 to 100.

5. A process for the preparation of a compound as claimed in claim 1, which comprises subjecting 2 moles of an amine of the general formula

H—X (2)

in which X has the meaning indicated in claim 1, to a condensation reaction with a bis-epoxide of the general formula

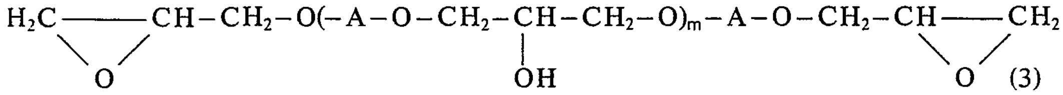

(3)

in which A and m have the meaning indicated in claim 1, at temperature from 80 to 200°C in the presence of an acid catalyst and reacting the condensation product with (m+2)q moles of ethylene oxide and/or propylene oxide at 100 to 200°C in the presence of a basic catalyst, q having the meaning indicated in claim 1.

6. Use of the compounds as claimed in any of claims 1 to 4 as surfactants.

7. Use of the compounds as claimed in any of claims 1 to 4 as dispersing agents.

8. Use of the compounds as claimed in any of claims 1 to 4 as dispersing agents for colorants.

9. Use of the compounds as claimed in any of claims 1 to 4 as dispersing agents for pigments.

10. Use of the compounds as claimed in any of claims 1 to 4 for the preparation of queous printing inks of emulsion paints.

**Revendications**

1. Composés répondant à la formule générale:

$$X—Y—O—(—A—O—Y—O—)_m—A—O—Y—X \qquad (1)$$

dans laquelle

X représente un radical répondant à la formule:

$$[R^1—G_p—(O—CHR^2—CHR^3—)_n]_2N— \qquad (1\,a)$$

dans laquelle:

$R^1$ représente un radical aliphatique contenant de 6 à 30 atomes de carbone, saturé ou contenant une ou plusieurs doubles liaisons éthyléniques,
G représente un radical phénylène ou naphtylène,
p est égal à 0 ou à 1,
$R^2$ et $R^3$ représentent chacun l'hydrogène ou un radical méthyle mais ne peuvent pas représenter chacun simultanément un radical méthyle et
n est un nombre de 0 à 25,

Y représente un radical répondant à la formule:

$$—CH_2—\underset{\displaystyle (O—CHR^2—CHR^3)_q—OH}{\underset{|}{CH}}—CH_2— \qquad (1\,b)$$

dans laquelle

$R^2$ et $R^3$ ont les significations indiquées ci-dessus et
q représente des nombres, identiques ou différents, pouvant aller de 0 à environ 200,

A représente un radical répondant à la formule générale:

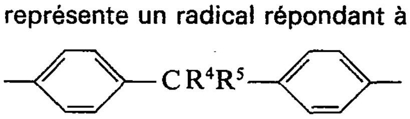

(1 c)

dans laquelle

$R^4$ et $R^5$ représentent chacun l'hydrogène ou un alkyle en $C_1$—$C_3$, et
m représente un nombre de 0 à 5, avec la condition que n et q ne soient pas égaux à zéro en même temps.

2. Composés selon la revendication 1 dans lesquels:

$R^1$ représente un radical aliphatique en $C_6$—$C_{20}$ qui est saturé ou qui contient une ou deux insaturations,
G représente un radical phénylène,
n représente un nombre de 1à 15,
q représente un nombre de 10 à 100,
$R^4$ et $R^5$ représentent chacun l'hydrogène ou un radical méthyle ou
m est égal à zéro.

3. Composés selon l'une des revendications 1 et 2 dans lesquels $R^1$ représente le radical d'un alcool gras provenant de graisses ou d'huiles naturelles ou d'un alcool provenant de l'oxosynthèse.

4. Composés selon l'une quelconque des revendications 1 à 3, dans lesquels le radical $(OCHR^2CHR^3)_q$ est une chaîne polyoxyéthylène ou une chaîne d'un copolymère séquencé constitué de motifs d'oxyde de propylène et de motifs d'oxyde d'éthylène, l'indice q étant un nombre de 10 à 100.

5. Procédé de préparation des composés selon la revendication 1, procédé caractérisé en ce qu'on condense 2 moles d'une amine répondant à la formule générale

$$H—X \qquad (2)$$

dans laquelle X a la signification donnée à la revendication 1, avec un bis-époxyde répondant à la formule générale:

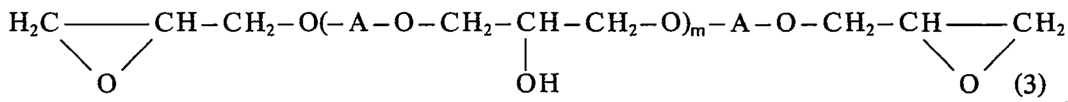
(3)

dans laquelle A et m ont les significations données à la revendication 1, à une température de 80 à 200° C, en présence d'un catalyseur acide, et on fait réagir le produit de condensation avec (m+2)q moles d'oxyde d'éthylène et/ou d'oxyde de propylène (q ayant la signification donnée à la revendication 1), à une température de 100 à 200° C, en présence d'un catalyseur basique.

6. Application des composés selon l'une quelconque des revendications 1 à 4 comme surfactifs.

7. Application des composés selon l'une quelconque des revendications 1 à 4 comme dispersants.

8. Application des composés selon l'une quelconque des revendications 1 à 4 comme dispersants pour colorants.

9. Application des composés selon l'une quelconque des revendications 1 à 4 comme dispersants pour pigments.

10. Application des composés selon l'une quelconque des revendications 1 à 4 pour la préparation d'encres d'imprimerie aqueuses et de peintures dispersions aqueuses.